# EUROPEAN PATENT APPLICATION

(11) **EP 0 536 828 A1**
(43) Date of publication of application: **14.04.1993**
(21) Application number: 92202972.3
(22) Date of filing: 29.09.1992
(51) Int. Cl.: H04N 7/087, H04N 5/445

(54) **Television receiver**

(30) Priority: 07.10.1991 EP 91202604
(71) Applicant: Philips Electronics N.V., 5621 BA Eindhoven (NL)
(72) Inventor: Vaske, Bernardus Hermanus Maria, NL-5656 AA Eindhoven (NL); Vroom, Ronald Robbert, NL-5656 AA Eindhoven (NL)
(74) Representative: Kooiman, Josephus Johannes Antonius

(57) **Abstract**

Television receiver comprising two tuners (3,4) and a multipage teletext decoder (7). By coupling the teletext decoder to the second tuner it is possible to consult teletext pages of television transmitters other than that to which the receiver is tuned. The receiver is preferably provided with a memory (15) in which one or more preferential page numbers are stored for each transmitter. When paging through the corresponding teletext pages, the second tuner (4) is always tuned to the corresponding transmitter.

## Description

The invention relates to a receiver comprising two tuners for obtaining a first and a second video signal, a teletext decoder, a control circuit and a picture output. A television receiver of this type may be a television receiver with its own display screen but also, for example, a video recorder.

Receivers comprising two tuners and a teletext decoder have been commercially available for some time. In the known construction they are adapted to display the video signal of the first tuner as the main picture and to insert the video signal of the second tuner as a smaller format sub-picture in a corner of the main picture (Picture-in-Picture). The teletext decoder is always coupled to the first tuner so that only teletext pages of television transmitters to which this tuner is tuned can be called and displayed.

It is an object of the invention to provide a receiver comprising two tuners and a teletext decoder with additional attractive teletext features and providing ease of operation.

According to the invention the receiver is therefore characterized in that the control circuit is adapted to apply the second video signal to the teletext decoder while the first video signal is applied to the picture output. It is thereby achieved that a user can consult the teletext pages of a television transmitter different from that whose television program is being displayed. In this respect it is to be noted that the television program and the teletext picture are both displayed in full-screen format.

The current teletext decoders are often suitable for acquisition and storage of a plurality of teletext pages. In a favourable embodiment of the television receiver, which includes such a teletext decoder, the control circuit is coupled to a memory for storing predetermined tuning data and corresponding teletext page numbers. The tuning data are formed, for example, by channel numbers of receivable television transmitters or by program numbers assigned to the receivable television transmitters by the user. The corresponding page numbers are the numbers of, for example, popular teletext pages which are transmitted by the relevant television station and are often consulted by the user. They may have been programmed in the memory, *inter alia,* by the user. They may also be detected by the control circuit as being the most frequently consulted teletext pages. The control circuit is now adapted to successively apply a stored tuning data to the second tuner and the corresponding page numbers to the teletext decoder. This feature adds further, extremely attractive possibilities of use to the television receiver. While the user has tuned to a television station, the teletext decoder acquires the popular teletext pages of this station as well as of the other stations. This acquisition is preferably carried out in the background, while the television receiver is in a television operating mode in which only the video picture is being displayed. The pages are subsequently available for display without any waiting time. The display is realised after an instruction given by the user. The acquired pages can be displayed with the aid of + and - keys. It is to be noted that television receivers having a memory for storing predetermined tuning data and corresponding teletext page numbers are known *per se.* However, in the known television receivers only the teletext pages are acquired from the television station to which the receiver is tuned.

The control circuit is preferably adapted to apply the tuning data corresponding to a stored page number to the second tuner when a teletext picture signal corresponding to said page number is being generated. On the one hand it is then ensured that the associated video signal is applied to the teletext decoder so that this decoder can receive and generate the most recently transmitted version of the teletext page. On the other hand this results in a simple and attractive way of tuning the second tuner to a desired teletext transmitter. This can be explained as follows. If a user of each receivable television station programs at least one page number and the corresponding tuning data in the memory, he can page through the programmed teletext pages by means of the above-mentioned + and - keys. At each teletext page the tuner is tuned to the corresponding transmitter. The user can now also call other teletext pages of this transmitter in the conventional manner. If the user selects a page number of another transmitter by means of the + or - key, the control circuit will tune the tuner to the other transmitter. In practice it is sensible to store for each transmitter at least the main index page in the memory because this page generally also identifies the transmitter.

In general, the station whose television program is being displayed and the transmitter whose teletext pages are consulted will not be synchronized with each other. To prevent picture jumps when changing over from television picture display to teletext display, and *vice versa,* the teletext decoder is preferably of a type having an independent acquisition and display timing. The acquisition timing is determined by the applied video signal of the second tuner. The display timing is derived from the displayed video signal of the first tuner. It is thereby also achieved that the television picture of one transmitter and the teletext picture of the other transmitter can be displayed simultaneously. This is sensible, *inter alia,* when consulting "news flash" pages in which the television picture is locally suppressed for displaying a box of topical teletext information.

Fig. 1 shows the general structure of a television receiver according to the invention.

Fig. 2 shows the flow chart of a control program carried out by a control circuit as shown in Fig. 1.

Fig. 3 shows the flow chart of a sub-program carried out by the control circuit in a television operating mode.

Fig. 4 shows the flow chart of a sub-program carried out by the control circuit in a special teletext operating mode.

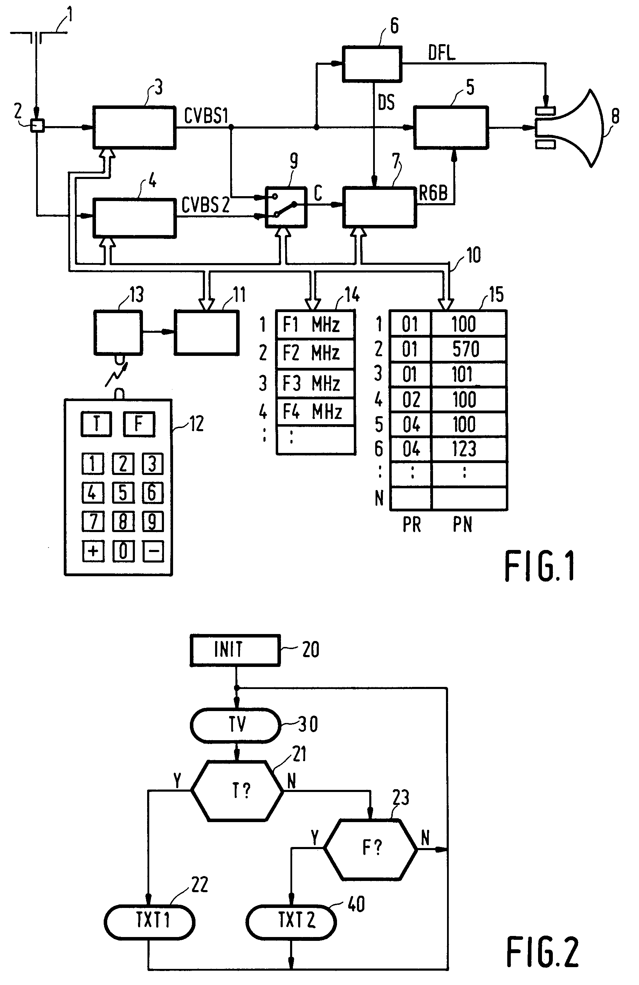

Fig. 1 shows the general structure of a television receiver according to the invention. The transmitter signal received at an antenna 1 are applied to a first tuner 3 and a second tuner 4 *via* an antenna splitter 2. A tuner is herein understood to mean a tuning circuit including an IF detector and a demodulator. The first tuner 3 supplies a first composite video signal CVBS1 which is applied to a video signal processing circuit 5 and a synchronizing and deflection circuit 6 and is further coupled to a teletext decoder 7. This decoder applies a teletext picture signal RGB to the video signal processing circuit 5. A picture generated by the video signal processing circuit 5 is displayed on a display screen 8. The synchronizing and deflection circuit 6 applies deflection signals DFL to the display screen and display synchronizing signals DS to the teletext decoder.

The second tuner 4 supplies a second composite video signal CVBS2 and, like the first tuner 3, it is coupled to the teletext decoder 7. More particularly, the two video signals CVBS1 and CVBS2 are applied to a selector 9 which applies a selected video signal to the teletext decoder. The teletext decoder 7 comprises a video processor (not shown), for example an integrated circuit SAA5291 of Philips, a digital video teletext circuit, for example an integrated circuit SAA5191 of Philips and a multipage memory for storing a plurality of teletext pages.

Operating instructions for the user are generated in a (remote control) operating unit 12 and applied *via* a receiver circuit 13 to a control circuit 11, for example a microcomputer from the MAB8400 Philips series. Control circuit 11 controls the tuners 3 and 4, the selector 9 and the teletext decoder 7 *via* a communication bus 10. A tuning memory 14 and a teletext memory 15 are connected to this communication bus.

The operation of the television receiver is further based on a control program which is carried out by the control circuit 11. Fig. 2 shows a flow chart of this control program. After the television receiver has been switched on in a step 20, the television receiver acquires a television operating mode in which the control circuit carries out a sub-program TV (30). If it is ascertained in a step 21 that the user has depressed a key "T" of the remote control unit, the television receiver acquires its normal teletext operating mode in which the control circuit carries out a sub-program TXT1 (22). If it is ascertained in a step 23 that a key "F" has been depressed, the television receiver acquires a special teletext operating mode in which the control circuit carries out a sub-program TXT2 (40).

### Television operating mode.

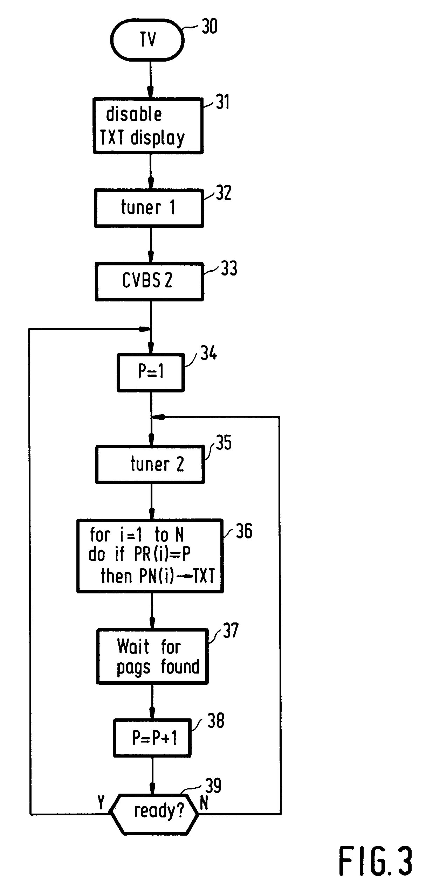

Fig. 3 shows a flow chart of the sub-program TV carried out in the television operating mode. In a step 31 of this sub-program the teletext decoder 7 (see Fig. 1) receives an assignment to refrain from the display of teletext pictures. Consequently, in this operating mode the display screen only displays the television program of the television station to which the first tuner 3 (see Fig. 1) is tuned. This tuner is tuned in a step 32 of the control program. In this step 32 tuning is effected after the user has entered a program number by means of the numbered keys on the remote control unit 12 (see Fig. 1). When this program number is received, the control circuit addresses a corresponding memory location in the tuning memory 14 (see Fig. 1). As is shown in Fig. 1, a transmitter frequency is fixed for each program number 1, 2, etc. in the tuning memory 14. The control circuit reads the stored transmitter frequency and applies it to the tuner.

In a step 33 of the sub-program TV the selector 9 is subsequently put into the position which is shown in Fig. 1. In this position the video signal CVBS2 of the second tuner 4 (see Fig. 1) is applied to the teletext decoder. While the teletext decoder is connected to the second tuner, the steps 34-39 are carried out. In these steps the teletext decoder acquires predetermined teletext pages for later display. Before explaining this, reference is made to the teletext memory 15 shown in Fig. 1. It comprises a plurality of locations 1, 2, ..., N in each of which a program number PR and a teletext page number PN are stored. As already stated hereinbefore, a program number corresponds to a transmitter frequency and thus to a predetermined television station. The reference PR(i) hereinafter refers to the program number which is stored at location i of the teletext memory and PN(i) is the teletext page number stored at the same location. Program numbers and teletext page numbers can be programmed in the teletext memory in known manner and will not be further described.

In the step 34 of the sub-program TV shown in Fig. 3 the initial value of 1 is assigned to a variable P. In a step 35 the control circuit addresses the tuning memory 14 (see Fig. 1) with the value of P, reads the transmitter frequency stored in this memory and applies it to the second tuner 4 (see Fig. 1). The variable P thus represents the program number of a television transmitter to which the second tuner is tuned.

In a step 36 of the sub-program it is checked for all locations 1 ... N of the teletext memory whether the program number PR(i) stored therein is equal to the program number P of the television transmitter to which the second tuner is tuned. In the case of equality the teletext page number PN(i) is applied to the teletext decoder. The teletext decoder thus receives all page numbers which are stored in the teletext memory for the relevant television transmitter. The teletext decoder acquires these pages in known manner for later display.

In a step 37 of the sub-program the control circuit waits for a signal of the teletext decoder indicating whether the requested pages have actually been received. There may be a maximum waiting time if it appears that a requested page is not transmitted. Subsequently, the value of the variable P is raised by 1 in a step 38. The sub-program subsequently returns to the step 35 in which the second tuner is now tuned to the television transmitter which corresponds to the new value of P.

The steps 36 and 37 are thus performed for all television transmitters. Hence, the teletext decoder acquires all teletext pages whose program number and page number are stored in the teletext memory. In a step 39 it is checked whether all program numbers have been processed. In that case the sub-program returns to the step 34 in order to repeat the process. It is thereby achieved that always a recent version of the teletext pages is stored.

A practical example will elucidate the foregoing. As is shown in Fig. 1, the teletext memory 15 is programmed with the teletext page numbers 100, 570 and 101 of the television station having program number 1 (briefly referred to as station 1), page number 100 of station 2 and page numbers 100 and 123 of station 4. While the user is watching the television program of an arbitrary station, the teletext decoder acquires the relevant teletext pages of the stations 1, 2 and 4 and stores them in its multipage memory.

### Normal teletext operating mode.

If the user depresses the key "T" of the remote control unit, the television receiver acquires its normal teletext operating mode. The control circuit now carries out the sub-program 22 (see Fig. 2). This sub-program has a generally known structure and need not be further explained. It is to be noted that in this operating mode the control circuit controls the selector 9 (see Fig. 1) in such a way that it is in the position not shown. In this position the video signal CVBS1 of the first tuner 3 is applied to the teletext decoder 7. The user can thus consult in the conventional manner the teletext pages of the same television station as that whose program is being displayed.

In this operating mode the second tuner can be used for other applications, for example, for Picture-in-Picture display.

### Special teletext operating mode.

If the user depresses the key "F" of the remote control unit, the television receiver acquires the special teletext operating mode. It is assumed that the teletext decoder has acquired all teletext pages stored in the teletext memory 15 (see Fig. 1) in the previous television operating mode and has stored these pages in the multipage memory.

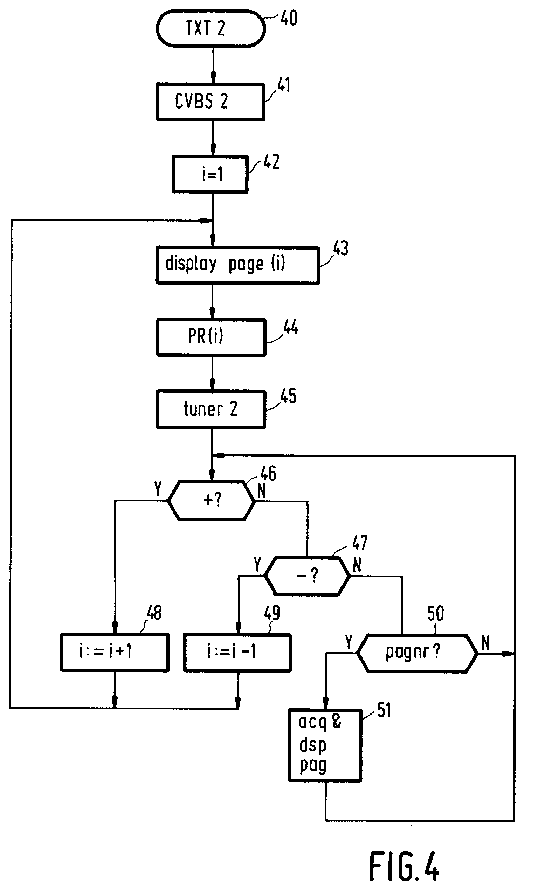

The control circuit carries out the sub-program 40 (see Fig. 2) in the special teletext operating mode. Fig. 4 shows the flow chart of this sub-program TXT2. In a step 41 the selector 9 (see Fig. 1) is put in the position in which the teletext decoder is connected to the second tuner 4. In a step 42 of the sub-program the initial value of 1 is assigned to a variable i. In a step 43 the teletext decoder is given the assignment to display that page of the stored pages which is defined in memory location i of teletext memory 15 (see Fig. 1). In a step 44 the program number PR(i) is read of the television transmitter of which this page is acquired. In a step 45 the second tuner 4 (see Fig. 1) is tuned to this transmitter.

While a previously acquired teletext page is thus being displayed, the sub-program waits for user instructions. In steps 46 and 47 it is checked whether the user has depressed a + or a - key of the remote control unit. If that is the case, the variable i is raised or lowered by 1 in a step 48 or 49, respectively. The sub-program subsequently returns to the step 43 in order to display the subsequent or previous page and to tune the second tuner to the transmitter which corresponds to the displayed page.

In a step 50 of the sub-program it is further checked whether the user has depressed a page number in the conventional manner. If that is the case, this page number is applied in a step 51 to the teletext decoder which then acquires this page and displays it upon reception.

In the previously mentioned practical example the foregoing implies the following. After the key "F" has been depressed, page 100 of station 1 is displayed. Subsequently, the user can page through the pages 100, 570 and 101 of station 1, 100 of station 2 and 100 and 123 of station 4 by using the + and - keys. If the display of, for example page 100 of station 2 is realised in this manner, the user can consult all further teletext pages of this transmitter 2. He can now read, for example, the home news *via* teletext while he is watching a foreign television station.

### Remarks.

In the special teletext operating mode the second tuner is always tuned to the television transmitter found while manipulating the + and - keys. This has two special advantages. On the one hand the displayed page is refreshed upon each reception. This is of great importance, *inter alia,* if the page is a rotating page. On the other hand it is not necessary to tune the second tuner manually to a transmitter whose user wants to consult teletext pages. The user only needs to page through the already stored teletext pages by means of the + and - keys until he sees a page of the desired television transmitter. The second tuner is then automatically tuned to this transmitter. Subsequently, he can consult all pages of this transmitter. It is sensible to store at least one page number of the receivable television transmitter, for example, the number of the main index page. This is notably sensible because the main index page generally clearly identifies the relevant television station by means of big letters or a logo.

The ease of operation of the television receiver is further enhanced if at least one teletext page number for each program number, for example, page number 100 of the main index is stored fully automatically. This can be realised, for example upon termination of an already present installation phase in which the transmitter frequency is coupled to each program number in the tuning memory. The user is preferably given the possibility of subsequently adding other page numbers to the data thus stored in the teletext memory.

The teletext decoder in the television receiver is preferably of a type having an independent acquisition and display timing. Such a decoder is, for example the previously mentioned integrated circuit SAA5191 of Philips. In this teletext decoder the acquisition timing is determined by the applied video signal and the display timing is determined by a display synchronizing signal. As is shown in Fig. 1, the display synchronizing signal DS is applied to the teletext decoder 7 by the synchronizing and deflection circuit 6. This circuit derives the synchronizing signal from the first video signal CVBS1 intended for display. It is thereby achieved that the display of teletext pages is synchronized with the first video signal, even if the teletext decoder is receiving the second video signal.

## Claims

1. A receiver for television signals comprising a first and a second tuner (3, 4) for obtaining a first and a second video signal, respectively, a teletext decoder (7) for receiving a video signal and generating a teletext picture signal, a picture output (8) for delivering a video signal and the teletext picture signal, and a control circuit (11) for controlling the first and the second tuner and the teletext decoder, characterized in that the control circuit is adapted to apply the second video signal to the teletext decoder while the first video signal is applied to the picture output.

2. A receiver as claimed in Claim 1, in which the teletext decoder is adapted for acquisition and storage of a plurality of teletext pages, characterized in that the control circuit is coupled to a memory (15) for storing predetermined tuning data and corresponding teletext page numbers and is adapted to successively apply a stored tuning data to the second tuner and the corresponding page numbers to the teletext decoder.

3. A receiver as claimed in Claim 2, characterized in that the control circuit is adapted to apply the tuning data corresponding to a stored page number to the second tuner when a teletext picture signal corresponding to said page number is being generated.

4. A receiver as claimed in Claim 2 or 3, characterized in that in response to a predetermined assignment the control circuit is adapted to store a tuning data and at least one teletext page number in the memory for all receivable television transmitters.

5. A receiver as claimed in any one of the preceding Claims, characterized in that the teletext decoder is of a type employing independent acquisition and display timing, the display timing being derived from the video signal of the first tuner.
